# EUROPÄISCHE PATENTSCHRIFT

(11) **EP 3 659 980 B1**
(45) Veröffentlichungstag und Bekanntmachung des Hinweises auf die Patenterteilung: **02.04.2025**
(21) Anmeldenummer: 19211841.2
(22) Anmeldetag: 27.11.2019
(51) Int. Cl.: C02F 1/42, B01J 39/05, B01J 39/07, B01J 39/17, B01J 41/05, B01J 41/07, B01J 47/016, C02F 1/70, C02F 103/02

(54) **VERFAHREN UND VORRICHTUNG ZUR REDUZIERUNG DES SAUERSTOFFGEHALTES VON HEIZUNGSWASSER**
METHOD AND DEVICE FOR REDUCING THE OXYGEN CONTENT OF HEATING WATER
PROCÉDÉ ET DISPOSITIF DE RÉDUCTION DE LA TENEUR EN OXYGÈNE DE L'EAU DE CHAUFFAGE

(30) Priorität: 27.11.2018 DE 102018129862
(43) Veröffentlichungstag der Anmeldung: 03.06.2020
(73) Patentinhaber: Perma-Trade Wassertechnik GMBH, 71229 Leonberg (DE)
(72) Erfinder: SAUTTER, Michael, 71229 Leonberg (DE); ENDE, Dietmar, 71287 Weissach (DE)
(74) Vertreter: Herrmann, Jochen

(56) Entgegenhaltungen:
- EP-A2- 0 065 687
- EP-B1- 0 065 687
- CA-A- 622 245
- DD-A1- 63 334
- DE-A1- 102017 105 435
- DE-B- 1 136 646
- DE-B- 1 200 757
- GB-A- 788 112

## Beschreibung

Die Erfindung betrifft ein Verfahren zur Reduzierung des Sauerstoffgehaltes des Heizungswassers einer Heizungsanlage.

Die Erfindung betrifft auch eine Vorrichtung zur Reduzierung des Sauerstoffgehaltes des Heizungswassers einer Heizungsanlage.

In Heiz- und Kühlkreisläufen gilt eingetragener Sauerstoff als Hauptverursacher von Korrosionsschäden. Während Salze und Kalk einfach mit Hilfe von Ionenaustauscherpatronen zur Enthärtung oder Entsalzung aus dem Füll- und Ergänzungswasser entfernt werden können, bleibt der Sauerstoffgehalt im Wasser dadurch unbeeinflusst.

Um zur Verhütung von Korrosionsschäden den im Wasser gelösten Sauerstoff zu entfernen sind verschiedene Methoden bekannt. Physikalische Methoden, wie beispielsweise eine thermische Entgasung oder eine Vakuum-Entgasung, sind apparativ sehr aufwändig. Die Zudosierung chemischer organischer oder anorganischer Sauerstoffbindemittel, wie beispielsweise Natriumsulfit, erhöht die Leitfähigkeit des Systemwassers in der Regel deutlich und vergrößert dadurch grundsätzlich das Korrosionsrisiko. Elektrochemische Verfahren, bei denen eine Sauerstoffreduktion an vorzugsweise großen Kathodenflächen erfolgt, sind ebenfalls apparativ aufwändig, da eine potentiostatische Steuerung erforderlich ist und Möglichkeiten zur Entschlammung als auch zur Entlüftung (Gasbildung) geschaffen werden müssen. Zudem wird je nach System sogenannter Sekundärsauerstoff an der Anode erzeugt, der gesondert abgeschieden werden muss.

Aus der GB 788,112 ist ein Verfahren zum Entfernen von Sauerstoff aus sauerstoffhaltigen Flüssigkeiten, insbesondere aus Wasser, bekannt, wie dies beispielsweise für den Betrieb von Dampfkesseln oder für die Verwendung in chemischen Laboren erwünscht ist. Die Flüssigkeit wird dazu durch ein Ionenaustauscherharz geleitet, welches sauerstoffzehrende Materialien enthält. Als sauerstoffzehrende Materialien sind in der Flüssigkeit unlösliche Stoffe, beispielsweise Metalloxide oder Metallhydroxide, vorgeschlagen. Bei dem Ionenaustauscher kann es sich um einen Kationenaustauscher, beispielsweise in der Natriumform oder der Protonenform, um einen Anionenaustauscher oder um ein Gemisch aus beiden handeln. Der Sauerstoff wird dabei nicht durch einen Ionen-Austauschprozess entfernt, der Ionentauscher dient lediglich als Träger für das sauerstoffzehrende Material. Nachteilig verläuft die Reaktion zwischen den sauerstoffzehrenden Materialien und dem in der Flüssigkeit gelösten Sauerstoff vergleichsweise langsam. Dies gilt insbesondere bei niedrigen Temperaturen, wie sie üblicherweise bei einer Anlage zugeführtem Frischwasser vorliegen. Es verbleibt somit auch nach der Behandlung ein großer Anteil des Sauerstoffs in dem Wasser, was zur Korrosion von Anlageteilen führen kann.

Die DE 10 2005 036 356 A1 offenbart eine Wasserbehandlungseinrichtung für eine Heizungsanlage. In einem Behälter sind Ionentauscherelemente und in einer benachbarten Kammer des Behälters oder einem Zusatzbehälter ein Korrosionsschutzmittel bevorratet. Zur zumindest teilweisen Entmineralisierung des Heizungswassers wird die Wasserbehandlungseinrichtung beim Befüllen der Heizungsanlage von dem zugeführten Frischwasser durchströmt. Dabei wird auch der pH-Wert des Wassers auf einen gewünschten Wert eingestellt. Das Korrosionsschutzmittel, welches als Molybdat oder als Sauerstoffbindemittel ausgebildet sein kann, gibt chemische Bestandteile in das Wasser ab, wodurch die Korrosion von Anlageteilen zumindest verringert wird. Die Zugabe von chemischen Sauerstoffbindemitteln erhöht jedoch, wie zuvor bereits ausgeführt, die Leitfähigkeit des Heizungswassers, was zu einem erhöhten Korrosionsrisiko führen kann.

Aus der DE 10 2008 003 327 A1 ist eine Wasserbehandlungseinrichtung für eine Heizungsanlage mit einer Entmineralisierungs- und Enthärtungseinrichtung, welche Ionentauscherelemente enthält, und einer nachgeschalteten pH-Wert-Stabilisierungseinheit bekannt. Die pH-Wert-Stabilisierungseinheit weist einen wasserdurchströmten Behälter auf, in dem ein pH-Stabilisator zur Stabilisierung des von den Ionentauscherelementen geschaffenen pH-Wertes angeordnet ist. Zum Befüllen einer Heizungsanlage wird die Entmineralisierungs- und Enthärtungseinrichtung mit der nachgeschalteten pH-Wert-Stabilisierungseinheit in den Frischwasserzulauf der Heizungsanlage geschaltet und von dem Frischwasser durchströmt. Dabei wird das Wasser zumindest teilweise entmineralisiert, in seinem pH-Wert eingestellt und der pH-Wert stabilisiert.

Die DE 10 2009 022 437 A1 beschreibt eine Vorrichtung zur Behandlung von in Leitungen geführtem Wasser, um einer Korrosion der Wasserleitungen vorzubeugen. Dazu wird das Wasser durch eine als Festbett ausgebildete Mischbettelektrode geleitet, welche zusätzlich zu einem Korrosionsschutz bewirkenden Phosphatteilchen zur Vergrößerung einer Elektrodenoberfläche elektrisch leitfähige Teilchen aufweist. Durch Anlegen einer Gleichspannung kann der pH-Wert des Wassers eingestellt und die Löslichkeit der verwendeten, vorzugsweise schwer löslichen Phosphate beeinflusst werden, so dass eine gezielte Einbringung von Phosphat in das Wasser ermöglicht wird.

Aus der DE 10 2013 102 426 A1 sind ein Verfahren und eine Vorrichtung zum Einstellen des pH-Wertes des Heizungswassers eine Heizungsanlage bekannt. Dabei wird das Heizungswasser im Zirkulationsbetrieb durch eine Entmineralisierungseinrichtung, die eine Mischbetteinheit aufweist, geleitet und entmineralisiert. Durch die OH-Abgabe des Anionenaustauschers wird das Heizungswasser zunächst auf einen höheren pH-Wert gebracht und kann dadurch auf einen gewünschten pH-Wert eingestellt werden. Soll der pH-Wert gesenkt werden, wird das Heizungswasser solange durch die Entmineralisierungseinrichtung und die Mischbetteinheit geleitet, bis der Anionenaustauscher erschöpft ist. Der pH-Wert wird jetzt durch die H⁺ Abgabe des Kationenaustauschers abgesenkt. Die Mischbetteinheit ist in einer Bypassleitung zum Hauptstrom des Heizkreislaufes angeordnet und wird entsprechend nur von einem Teilstrom des in dem Heizkreislauf zirkulierenden Heizungswassers durchströmt.

Die DE 10 2014 103 163 A1 zeigt eine Steuerungseinrichtung, welche es ermöglicht, mit Hilfe einer Entmineralisierungseinrichtung, die einen Kationenaustauscher und einen Anionenaustauscher enthält, den pH-Wert des Heizungswassers durch Vorgabe der Materialien der in der Heizungsanlage verwendeten Komponenten auf geeignete Werte einzustellen, um deren Korrosion zumindest gering zu halten. Dabei ist die Entmineralisierungseinrichtung der Wasserbehandlungseinrichtung in einem Nebenschluss zu dem Heizungswasserkreislauf der Heizungsanlage geschaltet, so dass ein Teilstrom des Heizungswassers durch die Entmineralisierungseinrichtung zirkuliert. Durch die zyklische Behandlung kann der pH-Wert des Heizungswassers an den gewünschten Bereich herangeführt werden.

CA 622245 A offenbart ein Verfahren zur Entfernung von gelöstem Sauerstoff und Kohlendioxid aus Wasser mittels eines Anionentauschers in der Sulfitform. Weitere, relevante Dokumente sind DE 11 36 646 B und DE 12 00 757 B.

Es ist Aufgabe der Erfindung, ein Verfahren bereitzustellen, mit dem Sauerstoff mit geringem apparativen Aufwand aus dem Heizungswasser einer Heizungsanlage entfernt werden kann, ohne dass dem Heizungswasser Sauerstoffbindemittel zudosiert werden müssen.

Es ist auch Aufgabe der Erfindung, eine einfach zu handhabende und kostengünstige Vorrichtung bereitzustellen, mit welcher Sauerstoff aus dem Heizungswasser einer Heizungsanlage entfernt werden kann.

Die das Verfahren betreffende Aufgabe der Erfindung wird mit einem Verfahren gemäß Anspruch 1 gelöst. Dementsprechend ist es vorgesehen, dass das Heizungswasser im Zirkulationsbetrieb durch einen ein Reduktionsmittel enthaltenden Kationenaustauscher, nämlich einen stark basischen Anionenaustauscher, geleitet wird der zu 5 % bis 10 % in der OH- Form vorliegt und dass der in dem Heizungswasser enthaltene Sauerstoff beim zirkulierenden Durchfluss des Heizungswassers durch den Anionenaustauscher durch Reaktion mit dem Reduktionsmittel zumindest anteilig aus dem Heizungswasser entfernt wird. Das Reduktionsmittel ist eine sauerstoffzehrende Chemikalie. Wird das Heizungswasser mit dem Reduktionsmittel in Kontakt gebracht, so wird ein Teil des in dem Heizungswasser gelösten Sauerstoffs durch Reaktion mit dem Reduktionsmittel entfernt. Durch den Zirkulationsbetrieb wird das Heizungswasser wiederholt durch den Anionenaustauscher mit dem darin enthaltenen Reduktionsmittel geleitet, wobei in jedem Umlauf ein Teil des Sauerstoffs aus dem Heizungswasser entfernt wird. Dadurch wird der Sauerstoff auch bei vergleichsweise langsamen Reaktionsgeschwindigkeiten zwischen dem Reduktionsmittel und dem Sauerstoff vollständig oder nahezu vollständig aus dem Heizungswasser beseitigt. Da der das Reduktionsmittel tragende Anionenaustauscher in den Heizungswasserkreislauf integriert ist wird Ihm warmes Heizungswasser zugeführt. Durch die vergleichsweise hohe Wassertemperatur wird die Reaktionsgeschwindigkeit zwischen dem Reduktionsmittel und dem Sauerstoff gegenüber der Behandlung von kaltem Frischwasser, wie es beispielsweise beim Befüllen oder beim Nachfüllen der Heizungsanlage zugeführt wird, merklich erhöht oder die Reaktion wird in Abhängigkeit von dem verwendeten Reduktionsmittel durch die hohen Temperaturen erst ermöglicht, was zu einer verbesserten Sauerstoffentfernung führt. Durch die Entfernung des Sauerstoffs aus dem Heizungswasser wird die Korrosion von Bauteilen der Heizungsanlage, insbesondere von aus Schwarzstahl hergestellten Bauteilen, erheblich herabgesetzt.

Zur Ausführung der Erfindung wird ein stark basischer Anionentauschers (zum Beispiel Purolite A-MB 400-OH) verwendet, der mittels eines Reduktionsmittels, zum Beispiel Natriumsulfit beladen ist. Mit einem solchen Anionentauscher ist eine effektive Sauerstoffentfernung aus dem Kreislaufwasser möglich. Bei der Reaktion mit dem gelösten Sauerstoff im Heizungswasser setzt sich Sulfition zum Sulfat um. Das Sulfat hat eine hohe Selektivität bezüglich des Anionentauschers und verbleibt somit weitestgehend auf dem Tauscherharz. Dies hat den Vorteil, dass die Leitfähigkeit des so behandelten Wassers nicht nennenswert erhöht wird. Im Kreislaufbetrieb, bei Temperaturen von 40 bis 60 °C, kann mit einer solchen Vorrichtung der Restsauerstoffgehalt auf kleiner 0,02 mg/L innerhalb kürzester Zeit reduziert werden.

Um den gängigen Richtlinien für Kreislaufwasser (zum Beispiel VDI 2025, AGFW FW 510, SWKI BT 102 ÖNORM H 5195-1) zu entsprechen, ist es günstig den pH-Wert ins Alkalische (8,2 bis 10,0) anzuheben. Dies kann mit der Erfindung einfach dadurch erreicht werden, dass der stark basische Anionentauscher, wie er vorstehend genannt wurde, mit dem Reduktionsmittel teilbeladen wird und zusätzlich dieser in der OH⁻ Form beigemischt wird.

In Umlaufsystemen mit unkontrollierten Sauerstoffzutritt, beispielsweise in Heizungsanlagen mit diffusionsoffenen Fußbodenrohren, oben liegenden offenen Ausgleichsbehältern oder einer unzureichenden Druckhaltung, gelangt permanent Sauerstoff in das Heizungswasser. Durch die stetige Sauerstoffentfernung durch das in den Umlauf eingebrachte Reduktionsmittel wird dieser zugeführte Sauerstoff aus dem Heizungswasser entfernt. Das Verfahren kann also insbesondere auch bei korrosionstechnisch nicht geschlossenen Heizungsanlagen vorteilhaft eingesetzt werden.

Der mit Reduktionsmittel beladene Ionenaustauscher kann einfach und kostengünstig und ohne hohen apparativen Aufwand in einen Heizungswasserkreislauf eingebracht werden. Vorteilhaft werden dem Heizungswasser keine sauerstoffbindenden Chemikalien zudosiert.

Vorteilhaft kann es vorgesehen sein, dass ein Hauptstrom des Heizungswassers oder ein von dem Hauptstrom abgezweigter Nebenstrom des Heizungswassers durch den das Reduktionsmittel enthaltenden Anionenaustauscher geleitet wird. Bei im Hauptstrom angeordnetem Anionenaustauscher wird in jedem Umlauf das Heizungswasser vollständig an dem Reduktionsmittel vorbeigeführt. Dadurch wird in wenigen Zyklen und damit nach kurzer Zeit eine deutliche Reduzierung des Sauerstoffgehaltes erreicht. Werden der Anionenaustauscher von einem von dem Hauptstrom abgezweigten Nebenstrom des Heizungswassers durchströmt, so wird in jedem Umlauf nur ein Teil des Heizungswassers dem Reduktionsmittel zugeführt. Vorteilhaft wird bei einer solchen Anordnung der Strömungswiderstand innerhalb des Hauptstroms des Heizungswasserkreislaufs durch den Anionenaustauscher nicht erhöht. Der Anionenaustauscher kann für kleinere Volumenströme ausgelegt werden. Zum Austausch des Anionenaustauschers muss lediglich der Nebenstrom unterbrochen werden, während das Heizungswasser weiterhin im Hauptstrom zirkulieren kann. Der Betrieb der Heizungsanlage muss somit zum Austausch des Anionenaustauschers nicht unterbrochen werden.

Der Anionenaustauscher kann so lange von dem Heizungswasser durchströmt werden, bis die gewünschte Wasserqualität erreicht ist. Danach kann der Durchfluss durch den Nebenstrom unterbrochen werden oder der Anionenaustauscher kann aus dem Hauptstrom entfernt werden. Es ist somit möglich, den Anionenaustauscher nur zeitweise mit dem Heizungswasserkreislauf zu verbinden. Kriterien zur Bewertung der Wasserqualität umfassen insbesondere den Sauerstoffgehalt, die Leitfähigkeit und/oder den pH-Wert des Heizungswassers. Das Heizungswasser wird vorzugsweise so lange durch den Anionenaustauscher geführt, bis der Sauerstoffgehalt und/oder die Leitfähigkeit und/oder der pH-Wert des Heizungswassers in einem jeweils gewünschten Sollbereich liegen.

Wenn das Heizungswasser durch den das Reduktionsmittel enthaltenden Anionenaustauscher geleitet wird, wobei der Anionenaustauscher anteilig, zu einem Volumenanteil in einem Bereich von 5 bis 10 %, in der OH-Form vorliegt, so kann durch Reaktion mit dem Reduktionsmittel der Sauerstoff aus dem Heizungswasser entfernt und gleichzeitig durch Abgabe von OH⁻ an das Heizungswasser das Heizungswasser, vorzugsweise entsprechend der Heizungswasserrichtlinie VDI 2035, alkalisiert werden. Es wird so eine gezielte Einstellung des pH-Wertes des Heizungswassers ermöglicht. Durch geeignete Wahl des pH-Wertes kann die Korrosion von Anlageteilen der Heizungsanlage weiter verringert werden. So kann beispielsweise der pH-Wert in einen Zielbereich von 8,2 bis 9,0 eingestellt werden, wie er für den Betrieb von Heizungsanlagen, in denen Aluminiumbauteile verwendet sind, geeignet ist.

Eine mögliche Erfindungsvariante ist dergestalt, dass das Heizungswasser nach dem Anionenaustauscher durch eine Mischbettpatrone geleitet wird und/oder dass das Heizungswasser im Hauptstrom oder im Nebenstrom durch eine Mischbettpatrone geleitet wird. Durch die im Umlaufwasser eingesetzte Mischbettpatrone können mögliche Nebenprodukte entfernt werden. Abhängig von dem verwendeten Ionentauscher und dem vorgesehenen Reduktionsmittel können verschiedene Nebenprodukte, beispielsweise Eisen(III)-Ionen/-hydroxid bei einem mit Eisenionen beladenen Kationenaustauscher oder Sulfat bei einem mit Sulfitionen beladenen Anionenaustauscher, in das Heizungswasser eingebracht werden. Eisen(III)hydroxid kann innerhalb der Heizungsanlage zur Schlammbildung führen, während sich Sulfat korrosionschemisch ungünstig auswirkt. Diese und vergleichbare Nebenprodukte können mit Hilfe der Mischbettpatrone aus dem Heizungswasser entfernt werden. Die Mischbettpatrone kann unmittelbar nach einem Anionenaustauscher bzw. einem Kationenaustauscher in dem Hauptstrom oder dem Nebenstrom des Heizwasserreislaufs angeordnet sein. Sie wird dann lediglich von dem Heizungswasser durchströmt, wenn auch der Anionenaustauscher bzw. der Kationenaustauscher durchströmt werden. Die Mischbettpatrone kann jedoch auch unabhängig von dem Anionenaustauscher bzw. dem Kationenaustauscher innerhalb des Heizkreislaufes, beispielsweise im Haupt- oder im Nebenstrom, angeordnet und betrieben werden.

Vorzugsweise kann es auch vorgesehen sein, dass die Mischbettpatrone in einem weiteren Nebenstrom des Hauptstroms oder einem weiteren Nebenstrom des Nebenstroms angeordnet ist. Dabei kann es auch vorgesehen sein, dass dem weiteren Nebenstrom eine Schalteinrichtung zugeordnet ist. Mit dieser Schalteinrichtung kann der Heizungswasserstrom so gesteuert werden, dass er wahlweise:
- Nur durch den Hauptstrom bzw. den Nebenstrom geführt ist,
- parallel durch den Hauptstrom bzw. den Nebenstrom und den weiteren Nebenstrom geführt ist oder
- nur durch den weiteren Nebenstrom geführt ist.

Eine solche Schalteinrichtung kann beispielsweise von einem 3-Wege-Ventil gebildet werden.

Denkbar ist auch die Verwendung einer Schalteinrichtung die so arbeitet, dass der Heizung Wasserstrom so gesteuert werden kann, dass er wahlweise
- Nur durch den Hauptstrom bzw. den Nebenstrom geführt ist, oder
- nur durch den weiteren Nebenstrom geführt ist.

Eine solche Schalteinrichtung kann beispielsweise von einem 2-Wege-Ventil gebildet werden.

Um durch die Sauerstoffentfernung in das Heizungswasser eingebrachte Nebenprodukte aus dem Heizungswasser zu entfernen kann es vorgesehen sein, dass das Heizungswasser nach dem Anionenaustauscher durch einen Filter, insbesondere durch einen Tiefenfilter, geleitet wird und/oder dass das Heizungswasser im Hauptstrom oder im Nebenstrom durch einen Filter, insbesondere durch einen Tiefenfilter, geleitet wird. Der Filter kann alternativ oder zusätzlich zu einer Mischbettpatrone in dem Heizungswasserkreislauf integriert sein. Der Filter kann unmittelbar nach einem Anionenaustauscher in dem Hauptstrom oder dem Nebenstrom des Heizwasserreislaufs angeordnet sein. Er wird dann lediglich von dem Heizungswasser durchströmt, wenn auch der Anionenaustauscher durchströmt wird. Der Filter kann jedoch auch unabhängig von dem Anionenaustauscher innerhalb des Heizkreislaufes, beispielsweise im Haupt- oder im Nebenstrom, angeordnet und betrieben werden.

Eine hohe Reaktionsgeschwindigkeit zwischen dem in dem Heizungswasser gelösten Sauerstoff und dem Reduktionsmittel kann dadurch begünstigt werden, dass das Heizungswasser im Vorlauf der Heizungsanlage durch den Anionenaustauscher geleitet wird. Im Vorlauf der Heizungsanlage weist das Heizungswasser eine hohe Temperatur auf. Durch die hohen Temperaturen wird die Reaktionsgeschwindigkeit zwischen dem Sauerstoff und dem Reduktionsmittel merklich angehoben bzw. wird die Reaktion zwischen dem Sauerstoff und dem Reduktionsmittel in Abhängigkeit von dem verwendeten Reaktionsmittel erst ermöglicht. Es wird so eine effiziente Entfernung des Sauerstoffs aus dem Heizungswasser erreicht.

Die die Vorrichtung betreffende Aufgabe der Erfindung wird dadurch gelöst, dass in einem Hauptstrom oder in einem Nebenstrom eines Heizungswasserkreislaufs der Heizungsanlage eine von dem Heizungswasser durchströmte Anionenaustauscherpatrone angeordnet ist, dass die Anionenaustauscherpatrone einen stark basischen Anionenaustauscher aufweist und dass der Anionenaustauscher mit einem Reduktionsmittel für Sauerstoff beladen ist.

Zusätzlich kann es auch vorgesehen sein, dass eine Anionenaustauscherpatrone und/oder eine Kationenaustauscherpatrone in eine Frischwasserzuleitung integriert ist. Über die Frischwasserzuleitung kann der Heizungswasserkreislauf der Heizungsanlage mit Frischwasser erstbefüllt oder nachgespeist werden. Insofern wird bereits bei der Erstbefüllung und/oder bei der Nachspeisung des Heizungswasserkreislaufs mit Frischwasser eine Entfernung des Sauerstoffs aus dem zugeführten Frischwasser bewirkt. Dabei ist die Effektivität mit der der Sauerstoff aus dem Frischwasser entfernt werden kann etwas geringer, verglichen zu der Integration der Anionenaustauscherpatrone direkt in den Heizkreislauf, vorzugsweise in den Vorlauf des Heizungswasserkreislaufs. Wie dies vorstehend beschrieben wurde, begünstigt die hohe Wassertemperatur im Vorlauf den Wirkungsgrad. Allerdings ist es so, dass auch bei Integration in die Frischwasserzuleitung eine merkliche Absenkung des Sauerstoffgehalts erfolgen kann. Insbesondere hat sich gezeigt, dass der Sauerstoffgehalt des zugeführten Frischwassers um ca. 80 % reduziert werden kann. Weniger Sauerstoff bedeutet direkt auch eine Verringerung der Magnetit-Schlammbildung. Magnetitschlamm bildet ein Korrosionsprodukt im Heizungswasserkreislauf. Insofern wird durch die Integration in die Frischwasserzuleitung bereits verhindert, dass sich bei der Erstbefüllung und/oder bei der Nachspeisung Magnetitschlamm im Heizungswasserkreislauf im größeren Umsatz bildet.

Das Heizungswasser wird im Umlauf durch die Anionenaustauscherpatrone geleitet und dabei in Kontakt mit dem Reduktionsmittel gebracht. Entsprechend den Ausführungen zu dem Verfahren reagiert der in dem Heizungswasser enthaltene Sauerstoff mit dem Reduktionsmittel und wird dadurch aus dem Heizungswasser entfernt. Vorteilhaft wird das Heizungswasser im Zirkulationsbetrieb durch die Anionenaustauscherpatrone gelenkt. Der Sauerstoff kann somit über mehrere Zyklen aus dem Heizungswasser entfernt werden. Dies ermöglicht auch bei vergleichsweise langsamen Reaktionsgeschwindigkeiten zwischen dem Sauerstoff und dem Reduktionsmittel die vollständige oder nahezu vollständige Entfernung des in dem Heizungswasser gelösten Sauerstoffs. Da die Anionenaustauscherpatrone nicht in einem Frischwasserzulauf der Heizungsanlage, sondern innerhalb des Heizungswasserkreislaufes angeordnet sind, wird sie vom warmen Heizungswasser durchströmt. Die vergleichsweise hohen Temperaturen des Heizungswassers führen gegenüber einer Anordnung der Ionenaustauschpatrone in einem Frischwasserzulauf der Heizungsanlage zu einer merklichen Erhöhung der Reaktionsgeschwindigkeit zwischen dem Sauerstoff und dem Reduktionsmittel, was ebenfalls zu einer effizienten Entfernung des Sauerstoffs aus dem Heizungswasser beiträgt. Bestimmte, in Abhängigkeit von dem verwendeten Reduktionsmittel erforderliche Redox-Reaktionen werden durch die erhöhte Wassertemperatur erst ermöglicht. Die Heizungsanlage kann korrosionstechnisch nicht geschlossen ausgeführt sein. Eine solche korrosionstechnisch nicht geschlossene Heizungsanlage kann diffusionsoffene Fußbodenheizungsrohre, obenliegend offene Ausgleichsbehälter oder eine unzureichende Druckhaltung aufweisen. In solchen Heizungsanlagen gelangt Sauerstoff unkontrolliert in das Heizungswasser. Durch die Anordnung der Ionenaustauscherpatrone mit dem Reduktionsmittel in das Umlaufwasser wird vorteilhaft der während des Betriebes der Heizungsanlage in das Heizungswasser eingebrachte Sauerstoff entfernt.

Entsprechend der Erfindung ist es vorgesehen, dass als Reduktionsmittel an dem Anionenaustauscher Sulfitionen vorgesehen sind. Sulfitionen wirkend sauerstoffzehrend. Bei Kontakt mit dem Heizungswasser reagieren Sie mit dem in dem Heizungswasser gelösten Sauerstoff, wobei der Sauerstoff reduziert und das Sulfition SO₃²⁻ zum Sulfation SO₄²⁻ oxidiert wird. Vorteilhaft weist das Sulfation eine höhere Affinität zu dem Anionenaustauscher auf als die reduzierte Form des Sulfits. Dadurch wird vermieden, dass das Umlaufwasser zu stark mit der sauerstoffzehrenden Chemikalie belastet wird. Die Reaktion zwischen dem Sauerstoff und dem Sulfition kann beispielsweise gemäß der Reaktionsgleichung

2 Na₂SO₃ + O₂ → 2 Na₂SO₄

erfolgen. Die Reaktion des Sulfits mit dem Sauerstoff erfolgt erst bei höheren Temperaturen. Da das Reduktionsmittel vorteilhaft in dem Umlauf des warmen Heizungswassers angeordnet ist kann die Reaktion stattfinden.

Erfindungsgemäß ist es auch vorgesehen, dass bei dem Anionenaustauscher anteilig Hydroxidionen OH⁻ gegen Ionen des Reduktionsmittels, vorzugsweise gegen Sulfitionen SO₃²⁻, ersetzt sind. Neben der Reduktion des in dem Heizungswasser geführten Sauerstoffs durch Reaktion mit dem Reduktionsmittel kann das Heizungswasser durch Austausch darin gelöster Anionen gegen Hydroxidionen alkalisiert werden. Auf diese Weise kann der pH-Wert des Heizungswassers gezielt beeinflusst und in Kombination mit einem Kationenaustauscher auch eine Entsalzung des Heizungswassers erreicht werden.

Entsprechend bevorzugter Varianten der Erfindung kann es vorgesehen sein, dass in Strömungsrichtung nach der Anionenaustauscherpatrone eine Mischbettpatrone angeordnet ist. Durch die Mischbettpatrone bzw. durch einen Filter können mögliche Nebenprodukte, wie sie bei der Reaktion des Sauerstoffs mit dem Reduktionsmittel anfallen können, aus dem Heizungswasser entfernt werden. So kann in der Anionenaustauscherpatrone gebildetes Sulfat, welches korrosionschemisch ungünstige Eigenschaften aufweist, durch die nachgeschaltete Mischbettpatrone entfernt werden.

Besonders bevorzugt wird zuerst der Sauerstoff aus dem Heizungswasser reduktiv entfernt und das Heizungswasser anschließend alkalisiert, um gegebenenfalls an das Heizungswasser abgegebenes Sulfat zurückzuhalten bzw. gegen OH⁻- Ionen auszutauschen. Um dies in der bevorzugten Reihenfolge zu ermöglichen kann es vorgesehen sein, dass die Anionenaustauscherpatrone als Zweikammersystem oder als Mehrkammersystem ausgebildet ist, dass in einer in Strömungsrichtung vorderen Kammer der mit dem Reduktionsmittel beladene Anionenaustauscher angeordnet ist und dass in einer in Strömungsrichtung nachfolgenden Kammer ein Anionenaustauscher in OH-Form angeordnet ist.

Eine Trennung der Kammern der Anionenaustauscherpatrone kann dadurch erreicht werden, dass die Kammern der der Anionenaustauscherpatrone durch jeweils eine Filterscheibe, vorzugsweise durch jeweils eine Filterscheibe aus Sintermaterial, voneinander getrennt sind. Vorzugsweise wird das Heizungswasser beim Durchtritt durch die Filterscheibe gefiltert. Vorteilhaft sind die Anionenaustauscherpatrone und damit die Filterscheibe in den Heizungswasserkreislauf integriert und werden im Umlauf von dem Heizungswasser durchströmt.

Eine einfache Installation der Anionenaustauscherpatrone in einen Heizungskreislauf kann dadurch ermöglicht werden, dass die Anionenaustauscherpatrone jeweils einen Wassereinlaufanschluss und einen Wasserauslaufanschluss aufweisen. Der Wassereinlaufanschluss und der Wasserauslaufanschluss ermöglichen eine einfache Verbindung zu dem Leitungssystem der Heizungsanlage. Ist die Anionenaustauscherpatrone im Nebenschluss an den Heizungswasserkreislauf angeschlossen, so kann durch eine Unterbrechung der Wasserströmung durch den Nebenschluss, beispielsweise durch entsprechend vorgesehene Ventile und beispielsweise für Wartungszwecke, der Wasserfluss durch die Anionenaustauscherpatrone unterbrochen werden. Die Ionenaustauscherpatronen können auf diese Weise ohne Unterbrechung des Heizbetriebs gewechselt werden.

Entsprechend einer bevorzugten Ausgestaltungsvariante der Erfindung kann es vorgesehen sein, dass die die Anionenaustauscherpatrone an dem Vorlauf des Heizungswasserkreislaufes angeschlossen sind. Im Vorlauf weist das Heizungswasser seine höchste Temperatur auf. Bei der Anordnung der mit dem Reduktionsmittel beladenen Anionenaustauscherpatrone im Vorlauf der Heizungsanlage können aufgrund der hohen Wassertemperaturen hohe Reaktionsgeschwindigkeiten zwischen dem Reduktionsmittel und dem in dem Heizungswasser gelösten Sauerstoff erreicht werden. Der Sauerstoff kann entsprechend schnell und vollständig aus dem Heizungswasser entfernt werden. Es können auch Reduktionsmittel verwendet werden, die nur unter Zufuhr von Wärmeenergie mit Sauerstoff reagieren. Allerdings ist, abhängig vom verwendeten Anionenaustauscher -Material darauf zu achten, dass die Temperatur des zugeführten Wassers nicht oder nicht dauerhaft dauerhaft 65 °C überschreitet, da dann die Gefahr besteht, dass das verwendete Tauscherharz beschädigt wird, insbesondere dadurch eine Regeneration dieses Harzes nicht mehr möglich ist.

Die Erfindung wird im Folgenden anhand von in den Zeichnungen dargestellten Ausführungsbeispielen näher erläutert. Es zeigen:
- Fig. 1: in einer stark schematisierten Darstellung eine Heizungsanlage mit einer in einem Nebenschluss angeschlossenen Ionenaustauscherpatrone und
- Fig 2: in einer stark schematisierten Darstellung eine weitere Ausführungsform einer Heizungsanlage.

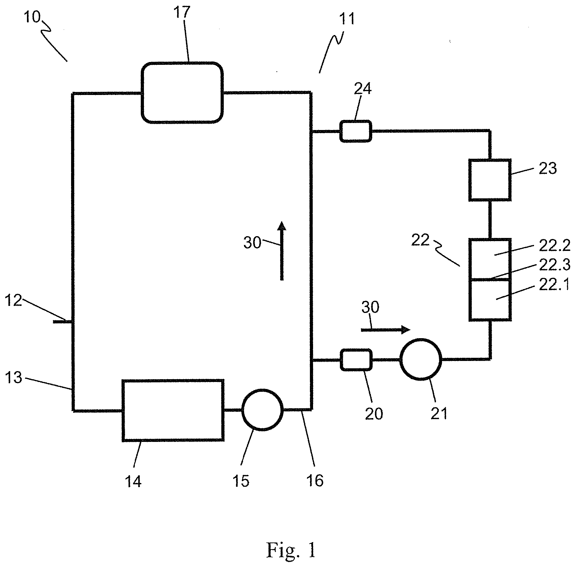

Figur 1 zeigt in einer stark schematisierten Darstellung eine Heizungsanlage 10 mit einer in einem Nebenschluss angeschlossenen Ionenaustauscherpatrone 22. Ein Heizungswasserkreislauf 11 der Heizungsanlage 10 bildet einen Vorlauf 16 und einen Rücklauf 13 aus. An dem Heizungswasserkreislauf 11 ist ein Frischwasseranschluss 12 zum Befüllen der Heizungsanlage 10 bzw. zum Nachfüllen von Heizungswasser vorgesehen. In dem stark vereinfacht dargestellten Heizungswasserkreislauf 11 sind ein Wärmetauscher 14, eine erste Pumpe 15 und ein Heizkörper 17 integriert. Der Wärmetauscher 14 überträgt Wärmeenergie, die beispielsweise von einer Gas- oder Öltherme bereitgestellt wird, auf das Heizungswasser. Das Heizungswasser wird mittels der ersten Pumpe 15 entsprechend einer durch einen Pfeil gekennzeichneten Strömungsrichtung 30 über den Vorlauf 16 zu dem Heizkörper 17 gefördert. Der Heizkörper 17 steht stellvertretend für weitere Heizkörper und dient der Beheizung eines Gebäudes. Von dem Heizkörper 17 wird das abgekühlte Heizungswasser über den Rücklauf 13 zurück zu dem Wärmetauscher 14 geleitet.

Die Ionenaustauscherpatrone 22 ist als Mehrkammerpatrone, vorliegend als Zweikammerpatrone, ausgebildet. Sie weist eine vordere Kammer 22.1 und eine nachfolgende Kammer 42.2 auf. Die vordere Kammer 22.1 und die nachfolgende Kammer 22.2 sind durch eine Filterscheibe 22.3 voneinander getrennt. Eingangsseitig ist die Ionenaustauscherpatrone 22 über ein erstes Absperrventil 20 und eine zweite Pumpe 21 mit dem Vorlauf 16 der Heizungsanlage 10 strömungstechnisch verbunden. Die zweite Pumpe 21 bewirkt, das Heizungswasser aus dem Vorlauf 16 der Heizungsanlage entsprechend der durch einen Pfeil gekennzeichneten Strömungsrichtung 30 zu der Ionenaustauscherpatrone 22 gefördert wird. In Strömungsrichtung nach der Ionenaustauscherpatrone 22 ist eine Mischbettpatrone 23 angeordnet. Ausgangsseitig ist die Mischbettpatrone 23 über ein zweites Absperrventil 24 mit dem Vorlauf 16 der Heizungsanlage 10 verbunden.

Mit Hilfe der zweiten Pumpe 21 wird Heizungswasser aus dem Vorlauf 16 des Heizkreislaufs 11 durch die beiden Kammern 22.1, 22.2 der Ionenaustauscherpatrone 22, die dazwischen angeordnete Filterscheibe 22.3 und die nachfolgende Mischbettpatrone 23 gefördert und anschließend über das zweite Absperrventil 24 wieder dem Vorlauf 16 des Heizkreislaufs 11 zugeführt.

In einem weiteren Ausführungsbeispiel ist die Ionenaustauscherpatrone 22 als Anionenaustauscherpatrone ausgeführt. In der vorderen Kammer 22.1 ist stark basischer Anionenaustauscher angeordnet, der mit einem Reduktionsmittel beladen ist, um dem Heizungswasser Sauerstoff zu entziehen. Das Reduktionsmittel ist vorliegend durch Sulfitionen SO₃²⁻ gebildet. Diese ersetzen teilweise die OH-Gruppen des in der vorderen Kammer 22.1 angeordneten Anionenaustauschers. Wird das Heizungswasser mit dem derart ausgebildeten Reduktionsmittel in Kontakt gebracht, so wird der darin gelöste Sauerstoff reduziert und die Sulfitionen SO₃²⁻ zu Sulfationen SO₄²⁻ oxidiert. Der Sauerstoff wird so aus dem Heizungswasser entfernt. In der nachfolgenden Kammer 22.2 ist ein Anionenaustauscher in OH-Form eingefüllt. Durch Austausch von in dem Heizungswasser geführten Anionen gegen von dem Anionenaustauscher bereitgestellte Hydroxidion wird das Heizungswasser alkalisiert. Das Heizungswasser kann somit sowohl vom Sauerstoff befreit als auch im Sinne der Heizungswasserrichtlinie VDI 2035 alkalisiert werden.

Vorteilhaft ist die Ionenaustauscherpatrone 22 im Umlauf des Heizungswasserkreislaufes 11 angeordnet. Das Heizungswasser wird somit in jedem Umlauf anteilig durch die Ionenaustauscherpatrone 22 geführt. Dadurch wird der Sauerstoff auch bei vergleichsweise langsamen Reaktionsgeschwindigkeiten zwischen dem Sauerstoff und dem Reduktionsmittel vollständig oder nahezu vollständig aus dem Heizungswasser entfernt. Da die Ionenaustauscherpatrone 22 an den Vorlauf 16 der Heizungsanlage 10 angeschlossen ist, weist das durch die Ionenaustauscherpatrone 22 geführte Heizungswasser eine vergleichsweise hohe Temperatur auf. Durch die hohe Temperatur wird die Reaktionsgeschwindigkeit zwischen dem Sauerstoff und dem Reduktionsmittel vorteilhaft merklich erhöht. Dies ist insbesondere für die Reaktion von Sauerstoff mit Sulfit relevant, da diese Reaktion Wärme benötigt.

Mit Hilfe der Ionenaustauscher werden sauerstoffzehrende Chemikalien als Reduktionsmittel mit dem Heizungswasser in Kontakt gebracht.

Bei einem Anionenaustauscher mit als Reduktionsmittel verwendeten Sulfitionen SO₃²⁻ weisen die durch Oxidation gebildeten Sulfationen SO₄²⁻ eine höhere Affinität zum Anionenaustauscher auf als die reduzierte Form des Sulfits. Dadurch wird vermieden, dass das Heizungswasser zu stark mit den sauerstoffzehrenden Chemikalien belastet wird.

Die zur Sauerstoffentfernung mit einem Reduktionsmittel versehenen Anionenaustauscherpatronen sind vorzugsweise als Einzelbettpatrone ausgebildet. Bei der Entfernung des Sauerstoffs entstehende Nebenprodukte, wie Sulfat beim Anionenaustauscher, welches sich korrosionschemisch ungünstig auswirkt, können bei dem in Figur 1 gezeigten Inlineverfahren beispielsweise durch die Filterscheibe 22.3 abfiltriert oder durch die nachgeschaltete Mischbettpatrone 23 aus dem Heizungswasser entfernt werden. Es ist denkbar, alternativ oder zusätzlich zu der Filterscheibe 22.3 oder der Mischbettpatrone 23 einen in Figur 1 nicht gezeigten Filter, insbesondere einen Tiefenfilter, in den Heizungswasserkreislauf 11 zu integrieren. Der Filter kann dabei in Anschluss an die Ionenaustauscherpatrone in den Nebenschluss des Heizungswasserkreislaufes integriert werden. Mit dem Filter können die bei der Entfernung des Sauerstoffs entstehenden Nebenprodukte entfernt werden.

Die der Ionenaustauscherpatrone 22 nachgeschaltete oder an beliebiger Stelle in den Systemwasserkreislauf eingebrachte Mischbettpatrone 23 ist von Vorteil, da je nach Zusammensetzung des Anlagenwassers auch mehr oder weniger viele Eisenionen von der zur Sauerstoffreduktion ausgebildeten Ionenaustauscherpatrone 22 verdrängt werden können. Die sauerstoffbindende Wirkung entfaltet sich dabei aber dennoch innerhalb des Heizungswasserkreislaufs.

Die Ionenaustauscherpatrone 22 weist vorzugsweise einen nicht gezeigten Wassereinlaufanschluss und einen ebenfalls nicht gezeigten Wasserauslaufanschluss auf. Die Ionenaustauscherpatrone 22 kann somit zum Austausch leicht von dem Heizungswasserkreislauf 11 getrennt und eine neue Ionenaustauscherpatrone 22 mit dem Heizungswasserkreislauf 11 verbunden werden.

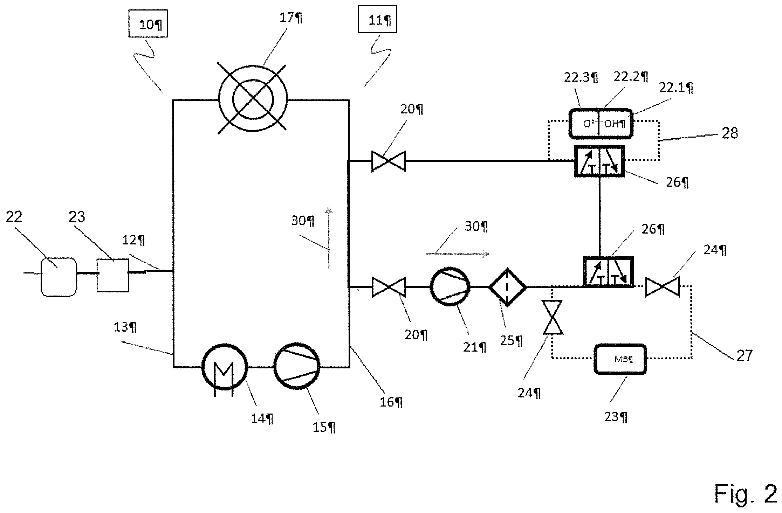

Figur 2 zeigt eine weitere Ausführungsform einer erfindungsgemäßen Heizungsanlage. 10 Dabei baut diese Ausführungsform einer Heizungsanlage 10 auf der Ausgestaltungsvariante nach Figur 1 auf, bzw. entwickelt diese weiter. Gleiche Teile sind mit gleichen Bezugszeichen nummeriert, sodass zur Vermeidung von Wiederholungen auf die vorstehenden Ausführungen Bezug genommen werden kann. Im Folgenden wird daher im Wesentlichen auf die Unterschiede zwischen den beiden Ausgestaltungsvarianten eingegangen.

Wie Figur 1 zeigt, besitzt die Heizungsanlage 10 eine im Nebenschluss angeschlossenen Ionenaustauscherpatrone 22. Ein Heizungswasserkreislauf 11 der Heizungsanlage 10 bildet einen Vorlauf 16 und einen Rücklauf 13 aus. An dem Heizungswasserkreislauf 11 ist ein Frischwasseranschluss 12 zum Befüllen der Heizungsanlage 10 bzw. zum Nachfüllen von Heizungswasser vorgesehen.

Im Bereich dieses Frischwasseranschlusses 12 ist eine weitere Ionenaustauscherpatrone 22 angeordnet. Zusätzlich oder alternativ kann es auch vorgesehen sein, dass in die Frischwasserzuleitung eine weitere Mischbettpatrone 23 integriert ist.

Der Aufbau der weiteren Ionenaustauscherpatrone kann wieder dergestalt sein, wie es vorstehend beschrieben bzw. in den Ansprüchen angegeben ist. Zur Vermeidung von Wiederholungen wird daher auf die vorstehenden Ausführungen und die Ansprüche Bezug genommen.

Die weitere Mischbettpatrone 23 kann derart gestaltet sein, wie es bereits vorstehend beschrieben bzw. in den Ansprüchen angegeben ist. Die Mischbettpatrone dient dazu, das Frischwasser, welches über die Mischbettpatrone 23 geleitet wird zumindest teilweise zu entmineralisieren. Zur Vermeidung von Wiederholungen wird auf die obigen Ausführungen Bezug genommen.

Besonders bevorzugt ist es jedoch, dass die weitere Ionenaustauscherpatrone 22 zusammen mit einer weiteren Mischbettpatrone 23 in die Frischwasserzuleitung integriert sind, wobei weiterhin vorzugsweise die weitere Mischbettpatrone 23 in Strömungsrichtung nach der weiteren Ionenaustauscherpatrone 22 angeordnet ist.

In dem stark vereinfacht dargestellten Heizungswasserkreislauf 11 sind ein Wärmetauscher 14, eine erste Pumpe 15 und ein Heizkörper 17 integriert. Der Wärmetauscher 14 überträgt Wärmeenergie, die beispielsweise von einer Gas- oder Öltherme bereitgestellt wird, auf das Heizungswasser. Das Heizungswasser wird mittels der ersten Pumpe 15 entsprechend einer durch einen Pfeil gekennzeichneten Strömungsrichtung 30 über den Vorlauf 16 zu dem Heizkörper 17 gefördert. Der Heizkörper 17 steht stellvertretend für weitere Heizkörper und dient der Beheizung eines Gebäudes. Von dem Heizkörper 17 wird das abgekühlte Heizungswasser über den Rücklauf 13 zurück zu dem Wärmetauscher 14 geleitet.

Von dem Heizungswasserkreislauf 11 ist ein Nebenschluss abgeleitet. Vorzugsweise wird der Nebenschluss von dem vom Wärmetauscher 14 kommenden Vorlauf 16 abgezweigt.

Der Nebenschluss kann, wie dies oben auch in Bezug auf Figur 1 beschrieben wurde mittels zweier Absperrventile 20 gegenüber dem Heizungswasserkreislauf 11 abgeriegelt bzw. freigegeben werden. Im freigegebenen Zustand kann das Heizungswasser parallel durch den Vorlauf und den Nebenschluss zirkuliert werden.

Um das Heizungswasser in dem Nebenschluss zu transportieren, ist wieder eine Pumpe 21 vorgesehen. Weiterhin kann optional ein Tiefenfilter 25 eingesetzt sein, der in Strömungsrichtung vor oder hinter der Pumpe 21 angeordnet sein kann.

Vorzugsweise ist der Tiefenfilter 25 hinter der Pumpe 21 angeordnet. Besonders bevorzugt ist der Tiefenfilter 25 in Strömungsrichtung vor einem Mischbett 23 bzw. vor der Ionenaustauscherpatrone 22 angeordnet.

Wie Figur 2 weiter erkennen lässt, ist in den Nebenschluss ein erster weiterer Nebenschluss 27 integriert. Im Bereich dieses ersten weiteren Nebenschlusses 27 ist eine Mischbettpatrone 23 eingesetzt. Diese Mischbettpatrone 23 kann derart gestaltet sein, wie es bereits vorstehend beschrieben bzw. in den Ansprüchen angegeben ist. Die Mischbettpatrone dient dazu, das Heizungswasser, welches über die Mischbettpatrone 23 geleitet wird zumindest teilweise zu entmineralisieren. Zur Vermeidung von Wiederholungen wird auf die obigen Ausführungen Bezug genommen. Der erste weitere Nebenschluss 27 besitzt zwei Absperrventile 24. Mittels dieser Absperrventile 24 kann die Mischbettpatrone 23 von dem Nebenschluss abgetrennt werden. Dies ermöglicht es die Mischbettpatrone 23 auszutauschen, beispielsweise wenn diese erschöpft ist.

Weiterhin kann eine Steuerungseinrichtung vorgesehen sein, die vorliegend in Form eines 3-Wege-Ventils 26 ausgebildet ist. Mittels des 3-Wegeventils 26 lässt sich der erste weitere Nebenschluss 27 so an den Nebenschluss ankoppeln, dass abhängig von der Stellung des 3-Wege Ventils 26 der Durchfluss des Heizungswassers über den ersten weiteren Nebenschluss 27 oder unter Umgehung dieses ersten weiteren Nebenschlusses 27 erfolgt.

Bei dem 3-Wegeventil 26 kann es sich vorzugsweise um einen elektrisch gesteuertes 3-Wegeventils 26 handeln.

Vorzugsweise kann eine Messwerteinrichtung vorgesehen sein, die den Leitwert des Heizungswassers in dem Heizungswasserkreislauf 11 ermittelt. Signalisiert die Messwerteinrichtung einen unerwünscht hohen Leitwert des Heizungswassers, so wird das Dreiwegeventil 26 von einer Steuereinrichtung mittels eines Schaltsignals so angesteuert, dass der Durchfluss des Heizungswassers über den ersten weiteren Nebenschluss 27 erfolgt. Das Heizungswasser fließt dann über die Mischbettpatrone 23. In der Mischbettpatrone 23 wird das Heizungswasser zumindest teilweise entmineralisiert. Dadurch reduziert sich der Leitwert. Das Dreiwegeventil 26 kann so lange geschaltet sein, bis der Leitwert wieder seinen gewünschten Wert einnimmt. Dann wird das Dreiwegeventil 26 umgeschaltet und das Heizungswasser fließt im Nebenschluss weiter, beispielsweise zu einer Ionenaustauscherpatrone 22.

Die Verwendung des weiteren Nebenschlusses 27, des Mischbett 23 und des 3-Wegeventils 26 stellt eine Option dar, die nicht zwingend bei dem Ausführungsbeispiel gemäß Figur 2 vorhanden sein muss.

In dem Nebenschluss ist weiterhin ein zweiter weiterer Nebenschluss 28 vorgesehen. Der zweite weitere Nebenschluss 28 ist über ein 3-Wegeventil 26 an den Nebenschluss angeschlossenen. In den zweiten weiteren Nebenschluss 28 ist die Ionenaustauscherpatrone 22 integriert.

Der Aufbau dieser Ionenaustauscherpatrone kann wieder dergestalt sein, wie es vorstehend beschrieben bzw. in den Ansprüchen angegeben ist. Zur Vermeidung von Wiederholungen wird daher auf die vorstehenden Ausführungen und die Ansprüche Bezug genommen.

Abhängig von der Stellung des 3-Wegeventils 26 kann die Zirkulation des Heizungswassers im Nebenschluss so gesteuert werden, dass das Heizungswasser entweder über den weiteren Nebenschluss 28 geführt ist, oder dass das Heizungswasser unter Umgehung des zweiten weiteren Nebenschlusses 28 im Nebenschluss geleitet ist. Damit besteht die Möglichkeit die Ionenaustauscherpatrone 22 bedarfsweise zuzuschalten oder abzuschalten.

Vorzugsweise kann es vorgesehen sein, dass das Heizungswasser über einen vorgebbaren Zeitraum, beispielsweise mehrere Stunden pro Tag, durch die mit dem Reduktionsmittel beladene Ionenaustauscherpatrone 22 (und bedarfsweise auch durch den vorgeschalteten Tiefenfilter 25) strömt.

Vorzugsweise ist es vorgesehen, dass nicht gleichzeitig das Heizungswasser über die Mischbettpatrone 23 und die Ionenaustauscherpatrone 22 geleitet wird. Dann kann, abhängig von der gewünschten Betriebsweise, entweder die Mischbettpatrone 23 oder die Ionenaustauscherpatrone 22 vom Nebenschluss abgekoppelt werden.

Selbstverständlich ist es auch denkbar, dass gleichzeitig sowohl die Mischbettpatrone 23 als auch die Ionenaustauscherpatrone 22 durchströmt werden.

Bei der Erstbefüllung der Heizungsanlage 10 wird Frischwasser über den Frischwasseranschluss 12 in die Heizungsanlage 10 geleitet. Dabei durchströmt das Frischwasser zunächst die weitere Ionenaustauscherpatrone 22. In der weiteren Ionenaustauscherpatrone 22 erfolgt die Sauerstoffzehrung und es wird der Sauerstoff aus dem zugeführten Wasser (Leitungswasser) entfernt. Hierbei wird eine deutliche Reduzierung des Sauerstoffgehaltes erreicht. Im Anschluss an die Ionenaustauscherpatrone 22 durchströmt das zugeführte Frischwasser die weitere Mischbettpatrone 23. Hier erfolgt die zumindest teilweise Entsalzung des zugeführten Frischwassers. Das so aufbereitete Wasser mit reduziertem Sauerstoffgehalt und in zumindest teilweise entsalzt dem Zustand wird in die Heizungsanlage eingeleitet. Dementsprechend ist das Wasser bereits korrosionstechnisch optimiert aufbereitet.

Der Vollständigkeit halber soll an dieser Stelle darauf hingewiesen werden, dass im Rahmen der Erfindung eine Heizungsanlage 10 verstanden werden soll, bei der eine weitere Ionenaustauscherpatrone 22 im Bereich des Frischwasseranschlusses 12 bzw. im Bereich des Frischwasserzulauf integriert ist, wobei optional auch eine Mischbettpatrone 23 im Frischwasseranschluss 12 oder im Bereich des Frischwasserzulauf integriert ist. Insbesondere ist es denkbar, dass bei einer solchen Erfindungsausgestaltung auf die Verwendung eines Nebenschlusses, wie er in den Ausführungsbeispielen nach den Figuren 1 und 2 gezeigt ist, verzichtet ist.

Bei dem Ausführungsbeispiel nach der Figur 2 wird nach Befüllung der Heizungsanlage 10 das Heizungswasser im Heizungswasserkreislauf 11 zirkuliert. Dabei durchströmt das Heizungswasser auch den Nebenschluss. Bei Durchströmung des Nebenschlusses wird das durch den Nebenschluss geleitete Heizungswasser durch den optionalen Tiefenfilter 25 zumindest teilweise permanent gereinigt. Abhängig von der Schaltstellung der 3-Wege Ventile 26 kann eine Behandlung des Heizungswassers in der Mischbettpatrone 23 und/oder in der Ionenaustauscherpatrone 22 erfolgen.

Soll eine Komponente im Nebenschluss, beispielsweise der Tiefenfilter 25, die Pumpe 21, oder die Ionenaustauscherpatrone 22 getauscht werden, so lässt sich der Nebenschluss mittels der beiden Absperrventile 20 vom Heizungswasserkreislauf 11 trennen.

## Patentansprüche

1. Verfahren zur Reduzierung des Sauerstoffgehaltes des Heizungswassers einer Heizungsanlage (10), wobei das Heizungswasser im Heizungswasserkreislauf der Heizungsanlage (10) zirkuliert wird,
**dadurch gekennzeichnet,**
**dass** das Heizungswasser im Heizungswasserkreislauf im Zirkulationsbetrieb durch einen ein Reduktionsmittel enthaltenden Anionenaustauscher, nämlich einen stark basischen Anionenaustauscher, geleitet wird dass der in dem Heizungswasser enthaltene Sauerstoff beim zirkulierenden Durchfluss des Heizungswassers durch den Anionenaustauscher durch Reaktion mit dem Reduktionsmittel zumindest anteilig aus dem Heizungswasser entfernt wird, dass als Reduktionsmittel an dem Anionenaustauscher Sulfitionen vorgesehen sind, die bei Kontakt mit dem Heizungswasser mit dem in dem Heizungswasser gelösten Sauerstoff reagieren, wobei der Sauerstoff reduziert und die Sulfitionen zu Sulfationen oxidiert werden, wobei die Sulfationen eine höhere Affinität zu dem Anionenaustauscher aufweist als die reduzierte Form des Sulfits, dass das Heizungswasser durch den das Reduktionsmittel enthaltenden Anionenaustauscher geleitet wird, und dass der Anionenaustauscher anteilig, nämlich zu einem Volumenanteil in einem Bereich von 5 bis 10 %, in der OH-Form vorliegt.

2. Verfahren nach Anspruch 1, **dadurch gekennzeichnet, dass** ein Hauptstrom des Heizungswassers oder ein von dem Hauptstrom abgezweigter Nebenstrom des Heizungswassers durch den das Reduktionsmittel enthaltenden Anionenaustauscher geleitet wird.

3. Verfahren nach Anspruch 1 oder 2, **dadurch gekennzeichnet, dass** das Heizungswasser nach dem Anionenaustauscher durch eine Mischbettpatrone (23) geleitet wird und/oder dass das Heizungswasser im Hauptstrom oder im Nebenstrom durch eine Mischbettpatrone (23) geleitet wird.

4. Verfahren nach einem der Ansprüche 1 bis 3, **dadurch gekennzeichnet, dass** das Heizungswasser nach dem Anionenaustauscher durch einen Filter, insbesondere durch einen Tiefenfilter, geleitet wird und/oder dass das Heizungswasser im Hauptstrom oder im Nebenstrom durch einen Filter, insbesondere durch einen Tiefenfilter, geleitet wird.

5. Verfahren nach einem der Ansprüche 1 bis 4, **dadurch gekennzeichnet, dass** das Heizungswasser im Vorlauf (16) der Heizungsanlage (10) durch den Anionenaustauscher geleitet wird, und/oder dass Frischwasser zur Befüllung oder Nachspeisung der Heizungsanlage durch einen Kationenaustauscher und/oder den oder einen weiteren Anionenaustauscher geleitet wird

6. Heizanlage mit einer Vorrichtung zur Reduzierung des Sauerstoffgehaltes des Heizungswassers in der Heizungsanlage (10), **dadurch gekennzeichnet, dass** in einem von einem Hauptstrom abgezweigten Nebenstrom eines Heizungswasserkreislaufs (11) der Heizungsanlage (10) eine von dem Heizungswasser durchströmte Anionenaustauscherpatrone angeordnet ist, dass die Anionenaustauscherpatrone einen stark basischen Anionenaustauscher aufweist dass der Anionenaustauscher mit einem Reduktionsmittel für Sauerstoff beladen ist, dass als Reduktionsmittel an dem Anionenaustauscher Sulfitionen vorgesehen sind, die bei Kontakt mit dem Heizungswasser mit dem in dem Heizungswasser gelösten Sauerstoff reagieren, wobei der Sauerstoff reduziert und die Sulfitionen zu Sulfationen oxidiert werden, wobei die Sulfationen eine höhere Affinität zu dem Anionenaustauscher aufweist als die reduzierte Form des Sulfits, und dass der Anionenaustauscher mit dem Reduktionsmittel zu einem Volumenanteil von 5 bis 10 % in der OH-Form vorliegt.

7. Vorrichtung nach Anspruch 6, **dadurch gekennzeichnet, dass** in Strömungsrichtung nach der Anionenaustauscherpatrone eine Mischbettpatrone (23) angeordnet ist und/oder dass in Strömungsrichtung nach der Kationenaustauscherpatrone ein Filter, vorzugsweise ein Tiefenfilter, und/oder eine Mischbettpatrone (23) angeordnet ist.

8. Vorrichtung nach Anspruch 6 oder 7, **dadurch gekennzeichnet, dass** die Anionenaustauscherpatrone als Zweikammersystem oder als Mehrkammersystem ausgebildet ist, dass in einer in Strömungsrichtung vorderen Kammer (22.1) der mit dem Reduktionsmittel beladene Anionenaustauscher angeordnet ist und dass in einer in Strömungsrichtung nachfolgenden Kammer (22.2) ein Anionenaustauscher in OH-Form angeordnet ist,
und wobei vorzugsweise vorgesehen sein kann, dass die Kammern der Anionenaustauscherpatrone durch jeweils eine Filterscheibe (22.3), vorzugsweise durch jeweils eine Filterscheibe aus Sintermaterial, voneinander getrennt sind.

9. Vorrichtung nach einem der Ansprüche 6 bis 8, **dadurch gekennzeichnet, dass** die Anionenaustauscherpatrone jeweils einen Wassereinlaufanschluss und einen Wasserauslaufanschluss aufweist und/oder dass die Anionenaustauscherpatrone an dem Vorlauf (16) des Heizungswasserkreislaufes (11) angeschlossen ist.

## Claims

1. Method for reducing the oxygen content of the heating water of a heating system (10), the heating water being circulated in the heating water circuit of the heating system (10), **characterized in that** the heating water in the heating water circuit is passed, in circulation operation, through an anion exchanger containing a reducing agent, namely a strongly basic anion exchanger, that the oxygen contained in the heating water is at least partially removed from the heating water by reaction with the reducing agent when the heating water flows through the anion exchanger in a circulating manner, that sulfite ions are provided as reducing agents on the anion exchanger, which, upon contact with the heating water, react with the oxygen dissolved in the heating water, whereby the oxygen is reduced and the sulfite ions are oxidized to sulfate ions, whereby the sulfate ions have a higher affinity for the anion exchanger than the reduced form of the sulfite, that the heating water is passed through the anion exchanger containing the reducing agent, and that the anion exchanger is present in the OH form in a proportion of 5 to 10% by volume.

2. The method according to claim 1, **characterized in that** a main stream of the heating water or a secondary stream of the heating water branched off from the main stream is passed through the anion exchanger containing the reducing agent.

3. The method according to claim 1 or 2, **characterized in that** the heating water downstream of the anion exchanger is passed through a mixed-bed cartridge (23) and/or that the heating water in the main stream or in the secondary stream is passed through a mixed-bed cartridge (23).

4. The method according to one of claims 1 to 3, **characterized in that** the heating water downstream of the anion exchanger is passed through a filter, in particular a depth filter, and/or that the heating water in the main stream or in the secondary stream is passed through a filter, in particular a depth filter.

5. The method according to one of claims 1 to 4, **characterized in that** the heating water in the feed flow (16) of the heating system (10) is passed through the anion exchanger, and/or **in that** fresh water for filling or replenishing the heating system is passed through a cation exchanger and/or the or a further anion exchanger.

6. Heating system with a device for reducing the oxygen content of the heating water in the heating system (10), **characterized in that** an anion exchanger cartridge through which the heating water flows is arranged in a secondary stream, branched off from a main stream, of a heating water circuit (11) of the heating system (10), that the anion exchanger cartridge has a strongly basic anion exchanger that the anion exchanger is loaded with a reducing agent for oxygen, that sulfite ions are provided as reducing agent at the anion exchanger, which ions react, upon contact with the heating water, with the oxygen dissolved in the heating water, the oxygen being reduced and the sulfite ions being oxidized to sulfate ions, wherein the sulfate ions have a higher affinity for the anion exchanger than the reduced form of the sulfite, and that the anion exchanger with the reducing agent is present in an amount of 5 to 10% by volume in the OH form.

7. The device according to claim 6, **characterized in that** a mixed-bed cartridge (23) is arranged downstream of the anion exchanger cartridge in the direction of flow and/or **in that** a filter, preferably a depth filter, and/or a mixed-bed cartridge (23) is arranged downstream of the cation exchanger cartridge in the direction of flow.

8. The device according to claim 6 or 7, **characterized in that in that** the anion exchanger cartridge is designed as a two-chamber system or as a multi-chamber system, **in that** the anion exchanger loaded with the reducing agent is arranged in a front chamber (22.1) in the direction of flow, and **in that** an anion exchanger in OH form is arranged in a chamber (22.2) subsequent in the direction of flow, and wherein it may preferably be provided that the chambers of the anion exchanger cartridge are separated from one another by a filter disc (22.3) in each case, preferably by a filter disc made of sintered material in each case.

9. The device according to one of the claims 6 to 8, **characterized in that** the anion exchanger cartridge has a water inlet connection and a water outlet connection and/or that the anion exchanger cartridge is connected to the feed flow (16) of the heating water circuit (11).

## Revendications

1. Procédé pour réduire la teneur en oxygène de l'eau de chauffage d'une installation de chauffage (10), l'eau de chauffage circulant dans le circuit d'eau de chauffage de l'installation de chauffage (10), **caractérisé en ce que** l'eau de chauffage dans le circuit d'eau de chauffage en mode de circulation est passée à travers un échangeur d'anions contenant un agent réducteur, à savoir un échangeur d'anions fortement basique, que l'oxygène contenu dans l'eau de chauffage est éliminé au moins partiellement de l'eau de chauffage lors de la circulation de l'eau de chauffage à travers l'échangeur d'anions par réaction avec l'agent réducteur, que des ions sulfite sont prévus comme agent réducteur sur l'échangeur d'anions, qui réagissent au contact de l'eau de chauffage avec l'oxygène dissous dans l'eau de chauffage, l'oxygène étant réduit et les ions sulfite étant oxydés en ions sulfate, les ions sulfate présentant une affinité plus élevée pour l'échangeur d'anions que la forme réduite du sulfite, que l'eau de chauffage est acheminée à travers l'échangeur d'anions contenant l'agent réducteur, et que l'échangeur d'anions est présent en proportion, à savoir dans une proportion volumique comprise entre 5 et 10 %, sous la forme OH.

2. Procédé selon la revendication 1, **caractérisé en ce qu'**un courant principal de l'eau de chauffage ou un courant secondaire de l'eau de chauffage dérivé du courant principal est conduit à travers l'échangeur d'anions contenant l'agent réducteur.

3. Procédé selon la revendication 1 ou 2, **caractérisé en ce que** l'eau de chauffage est conduite à travers une cartouche à lit mélangé (23) après l'échangeur d'anions et/ou **en ce que** l'eau de chauffage est conduite à travers une cartouche à lit mélangé (23) dans le courant principal ou dans le courant secondaire.

4. Procédé selon l'une des revendications 1 à 3, **caractérisé en ce que** l'eau de chauffage est conduite après l'échangeur d'anions à travers un filtre, en particulier à travers un filtre en profondeur, et/ou **en ce que** l'eau de chauffage est conduite dans le courant principal ou dans le courant secondaire à travers un filtre, en particulier à travers un filtre en profondeur.

5. Procédé selon l'une des revendications 1 à 4, **caractérisé en ce que** l'eau de chauffage est conduite dans le départ (16) de l'installation de chauffage (10) à travers l'échangeur d'anions, et/ou **en ce que** l'eau fraîche pour le remplissage ou la réalimentation de l'installation de chauffage est conduite à travers un échangeur de cations et/ou le ou un autre échangeur d'anions.

6. Installation de chauffage avec un dispositif pour réduire la teneur en oxygène de l'eau de chauffage dans l'installation de chauffage (10), **caractérisée en ce que** dans un courant secondaire d'un circuit d'eau de chauffage (11) de l'installation de chauffage (10), dérivé d'un courant principal, est disposée une cartouche de l'échangeur d'anions traversée par l'eau de chauffage, que la cartouche de l'échangeur d'anions présente un échangeur d'anions fortement basique que l'échangeur d'anions est chargé d'un agent réducteur pour l'oxygène, que des ions sulfite sont prévus comme agent réducteur sur l'échangeur d'anions, qui réagissent au contact de l'eau de chauffage avec l'oxygène dissous dans l'eau de chauffage, l'oxygène étant réduit et les ions sulfite étant oxydés en ions sulfate, les ions sulfate ayant une plus grande affinité pour l'échangeur d'anions que la forme réduite du sulfite, et l'échangeur d'anions étant présent sous la forme OH avec l'agent réducteur dans une proportion volumique de 5 à 10 %.

7. Dispositif selon la revendication 6, **caractérisé en ce qu'**une cartouche à lit mélangé (23) est disposée en aval de la cartouche de l'échangeur d'anions dans le sens de l'écoulement et/ou **en ce qu'**un filtre, de préférence un filtre en profondeur, et/ou une cartouche à lit mélangé (23) est disposé en aval de la cartouche de l'échangeur de cations dans le sens de l'écoulement.

8. Dispositif selon la revendication 6 ou 7, **caractérisé en ce que** la cartouche de l'échangeur d'anions est conçue comme un système à deux chambres ou comme un système à plusieurs chambres, que l'échangeur d'anions chargé d'agent réducteur est disposé dans une chambre (22.1) située en amont dans le sens de l'écoulement et qu'un échangeur d'anions sous forme OH est disposé dans une chambre (22.2) située en aval dans le sens de l'écoulement, et où il est de préférence possible de prévoir que les chambres de la cartouche de l'échangeur d'anions soient séparées l'une de l'autre par un disque filtrant (22.3) respectif, de préférence par un disque filtrant respectif en matériau fritté.

9. Dispositif selon l'une des revendications 6 à 8, **caractérisé en ce que** la cartouche de l'échangeur d'anions présente respectivement un raccord d'arrivée d'eau et un raccord de sortie d'eau et/ou **en ce que** la cartouche de l'échangeur d'anions est raccordée au départ (16) du circuit d'eau de chauffage (11).
